(19) Europäisches Patentamt

European Patent Office

Office européen des brevets

(11) **EP 1 406 180 B1**

(12) **FASCICULE DE BREVET EUROPEEN**

(45) Date de publication et mention
de la délivrance du brevet:
**15.06.2005 Bulletin 2005/24**

(51) Int Cl.⁷: **G06F 17/16**

(21) Numéro de dépôt: **02354153.5**

(22) Date de dépôt: **04.10.2002**

(54) **Dispositif de traitement comportant un dispositif de correction d'une matrice de covariance**

Signalsverarbeitungssystem mit einer Vorrichtung zum Korregieren einer Kovarianzmatrix

Signal processing system comprising a device to correct a covariance matrix

(84) Etats contractants désignés:
**AT BE BG CH CY CZ DE DK EE ES FI FR GB GR
IE IT LI LU MC NL PT SE SK TR**

(43) Date de publication de la demande:
**07.04.2004 Bulletin 2004/15**

(73) Titulaire: **Raise Partner**
**38000 Grenoble (FR)**

(72) Inventeur: **Oustry, François**
**38000 Grenoble (FR)**

(74) Mandataire: **Jouvray, Marie-Andrée et al
Cabinet Hecké,
World Trade Center - Europole,
5, place Robert Schuman,
B.P. 1537
38025 Grenoble Cedex 1 (FR)**

(56) Documents cités:
- **NDIAYE P M ET AL: "Delay sensitivity of quadratic controllers a singular perturbation approach" SIAM JOURNAL ON CONTROL AND OPTIMIZATION, vol. 38, no. 6, 2000, pages 1 -6, XP010537048**
- **MATEI B ET AL: "Reduction of bias in maximum likelihood ellipse fitting" PATTERN RECOGNITION, 2000. PROCEEDINGS. 15TH INTERNATIONAL CONFERENCE ON SEPTEMBER 3-7, 2000, LOS ALAMITOS, CA, USA,IEEE COMPUT. SOC, US, 3 septembre 2000 (2000-09-03), pages 794-798, XP010533407 ISBN: 0-7695-0750-6**
- **DELMAS J -P ET AL: "Performance analysis of an adaptive algorithm for tracking dominant subspaces" IEEE TRANSACTIONS ON SIGNAL PROCESSING, NOV. 1998, IEEE, USA, vol. 46, no. 11, pages 3045-3057, XP002226161 ISSN: 1053-587X**
- **KATO T ET AL: "AN APPROACH TO VEHICLE RECOGNITION USING SUPERVISED LEARNING" IEICE TRANSACTIONS ON INFORMATION AND SYSTEMS, INSTITUTE OF ELECTRONICS INFORMATION AND COMM. ENG. TOKYO, JP, vol. E83-D, no. 7, juillet 2000 (2000-07), pages 1475-1479, XP000970206 ISSN: 0916-8532**
- **"Programme des conférences" TIPE-2002 SUMMARY, [en ligne] 18 juin 2002 (2002-06-18), pages 1-5, XP002226162 Extrait de l'Internet: <URL:http://www.ensta.fr> [extrait le 2002-12-30]**

## Description

### Domaine technique de l'invention

L'invention concerne un dispositif de traitement d'une pluralité de signaux numériques sources, constitués par des échantillons de mesure des signaux à analyser, comportant un dispositif de correction d'une matrice de covariance, représentative des relations entre les signaux sources.

### État de la technique

La détermination de matrices de covariance associées à un ensemble de signaux sources numériques est utilisée dans de nombreux domaines pour analyser les propriétés des signaux sources, en particulier des corrélations entre ces signaux. C'est notamment le cas lors du traitement de signaux numériques nécessitant une estimation de modèles linéaires, par exemple pour la conception de filtres, le traitement d'images, en météorologie, etc... Elle est également utilisée dans les automatismes, notamment lors de la conception de lois de commande linéaires obtenues par des techniques de type quadratique sous hypothèse de bruit Gaussien (« LQG : linear quadratic Gaussian ») ainsi que dans le domaine de la finance, comme outil d'analyse du risque.

Les dispositifs de détermination de covariance classique, généralement intégrés dans un processeur de signaux numériques (DSP), sont le plus souvent conçus pour obtenir le moins de biais possible sur les variances et les co-variances associées à un ensemble de signaux numériques. Cependant, les techniques actuelles ne fournissent pas de valeurs correctes pour le spectre de la matrice de covariance, constitué par l'ensemble des valeurs propres de la matrice. Le biais sur le spectre de la matrice de covariance peut notamment être important lorsque les échantillons de mesure des signaux à analyser sont faibles. Les plus petites valeurs propres de la matrice sont sous-estimées et les plus grandes surestimées. Le conditionnement de la matrice, c'est-à-dire le rapport de sa plus grande valeur propre à sa plus petite valeur propre est, en conséquence, erroné.

Or, lorsque la matrice est utilisée comme entrée d'un dispositif de traitement numérique du signal, un mauvais conditionnement est souvent la cause d'instabilités des sorties du dispositif de traitement vis-à-vis de perturbations des signaux sources.

### Objet de l'invention

L'invention a pour but un dispositif de traitement comportant un dispositif de correction d'une matrice de covariance permettant d'améliorer le conditionnement de la matrice et de définir une correction stable vis-à-vis de petites perturbations des signaux sources, de manière à réduire l'écart entre une estimation a priori et une estimation à posteriori de variances et de covariances.

Selon l'invention, ce but est atteint par le fait que le dispositif de correction comporte des moyens de décomposition en éléments propres totaux, selon la méthode de décomposition spectrale de Kato, fournissant les valeurs propres totales de la matrice de covariance à corriger et des premiers vecteurs coefficients, pour la combinaison des signaux sources, le dispositif de correction comportant des moyens de correction utilisant les valeurs propres totales et les premiers vecteurs coefficients pour déterminer la matrice corrigée.

Selon un développement de l'invention, le dispositif de correction comporte des moyens de détermination, par un utilisateur, de seconds vecteurs coefficients pour la combinaison des signaux sources.

Selon un mode de réalisation préférentiel, les moyens de correction comportent des moyens d'estimation des variances de combinaisons des signaux sources utilisant les premiers et/ou les seconds vecteurs coefficients.

Selon une autre caractéristique de l'invention, le dispositif de correction comporte des moyens de recherche de la matrice corrigée la plus proche de la matrice à corriger, en fonction des variances fournies par les moyens d'estimation et de projecteurs totaux fournis par les moyens de décomposition en éléments propres totaux.

Les moyens de recherche appliquent, de préférence, une méthode de type quasi-Newton sur le dual d'un programme de moindres carrés semi-définis

### Description sommaire des dessins

D'autres avantages et caractéristiques ressortiront plus clairement de la description qui va suivre de modes particuliers de réalisation de l'invention donnés à titre d'exemples non limitatifs, et représentés aux dessins annexés, dans lesquels :

La figure 1 illustre, sous forme de schéma-bloc, un dispositif de détermintation et de correction de la matrice de covariance de N signaux sources.

La figure 2 représente un mode particulier de réalisation, selon l'art antérieur, du premier bloc du dispositif selon la figure 1.
La figure 3 représente un mode particulier du troisième bloc du dispositif selon la figure 1.

**Description de modes particuliers de réalisation.**

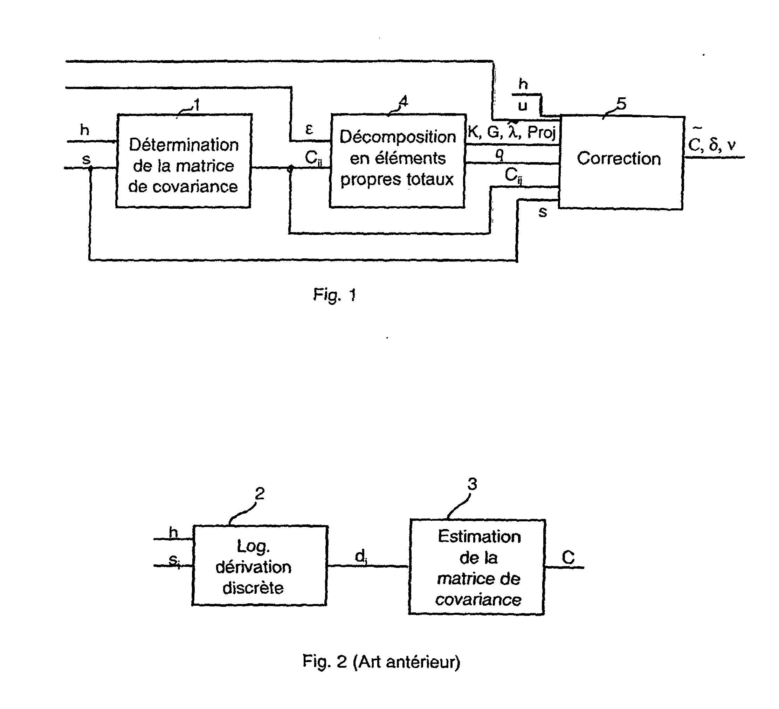

Le dispositif selon la figure 1 comporte un bloc 1 de détermination de la matrice de covariance C de N signaux sources numériques $s_1$ à $s_N$. Pour i=1,...,N, chaque signal $s_i$, constitué par m échantillons $s_i^1$ à $s_i^m$, peut être représenté sous la forme d'un vecteur :

$$s_i = \begin{bmatrix} s_i^1 \\ \vdots \\ s_i^t \\ \vdots \\ s_i^m \end{bmatrix}$$

avec un indice de discrétion temporelle t=1,...,m
Tous les échantillons de tous les signaux sources sont appliqués simultanément à l'entrée du bloc 1, qui dispose ainsi d'un historique échantillonné de tous les signaux sources.
Le bloc 1 de détermination de la matrice de covariance peut être réalisée de toute manière connue. Un mode de réalisation particulier du bloc 1, représenté à la figure 2, comporte un bloc 2 de log-dérivation et un estimateur 3 de la matrice de covariance. Le bloc 2 est un bloc standard, de type connu, recevant en entrée les N signaux sources et un pas de temps h, entier prédéterminé tel que $1 \leq h \leq m$. Le bloc 2 forme N signaux log-dérivés $d_i$, ou signaux de croissance relative, des N signaux sources $s_i$. Les signaux dérivés sont des vecteurs réels, de taille p = m-h, chaque signal dérivé $d_i$ pouvant être représenté sous la forme :

$$d_i = \begin{bmatrix} d_i^1 \\ \vdots \\ d_i^t \\ \vdots \\ d_i^p \end{bmatrix}$$

avec i = 1,...,N
Le signal $d_i$ est donné par l'équation :

$$d_i^t = \frac{s_i^{t+h} - s_i^t}{s_i^t}$$

pour i = 1,...,N et t = 1,...,p.
De plus, pour $s_i = 0$, alors $d_i = 0$. La fonction de dérivation est ainsi étendue à des signaux nuls.
L'estimateur 3 de la matrice de covariance est également un bloc standard, de type connu. Il reçoit en entrée les N signaux $d_i$, de taille p = m - h, et fournit en sortie une matrice de covariance estimée C, constituée par un tableau de taille NxN de réels $C_{ij}$ symétriques :

| | $S_1$ | | $S_i$ | | | $S_j$ | $S_N$ |
|---|---|---|---|---|---|---|---|
| $S_1$ | $C_{11}$ | | $C_{i1}$ | | | $C_{j1}$ | $C_{N1}$ |
| | | | | | | | |
| $S_i$ | $C_{1i}$ | | $C_{ii}$ | | | $C_{ji}$ | $C_{Ni}$ |

(suite)

| | | | | | | | | |
|---|---|---|---|---|---|---|---|---|
| | | | | | | | | |
| | | | | | | | | |
| $S_j$ | $C_{1j}$ | | $C_{ij}$ | | | $C_{jj}$ | $C_{Nj}$ |
| $S_N$ | $C_{1N}$ | | $C_{iN}$ | | | $C_{jN}$ | $C_{NN}$ |

Chaque grandeur $C_{ij}$ fournie par l'estimateur 3, qui peut être du type dit « empirique sans biais », est donnée par l'équation :

$$C_{ij} = \frac{1}{p-1} \sum_{t=1}^{p} \left( d_i^t - \overline{d}_i^t \right)\left( d_j^t - \overline{d}_j^t \right),$$

avec $1 \leq i,j \leq N$ et dans laquelle les valeurs $\overline{d}_i$ sont les moyennes empiriques des signaux log-dérivés $d_i$, conformément à l'équation :

$$\overline{d}_i = \frac{1}{p} \sum_{i=1}^{t} d_i^t$$

Le dispositif de correction comporte un bloc 4 de décomposition en éléments propres totaux qui reçoit en entrée la matrice C, fournie par le bloc 1 ou par tout autre moyen approprié, et un paramètre de stabilité $\varepsilon$, nombre réel positif. Le bloc 4 utilise la méthode de décomposition spectrale de Kato (T. Kato : « Perturbation Theory for Linear Operators », Springer-Verlag, 1980). Le bloc 4 calcule N valeurs propres réelles $\lambda_1$ à $\lambda_N$ de la matrice C ainsi que N vecteurs propres associés $q_1$ à $q_N$. Les valeurs propres sont telles que :
$\lambda_1 \geq \lambda_2 \geq ... \geq \lambda_N$
Il forme également K ensembles d'indices définissant des $\varepsilon$-groupes notés $G_1$ à $G_K$. Pour j = 1,...,N-1, $\lambda_j$ et $\lambda_{j+1}$ appartiennent à un même groupe si $\lambda_j - \lambda_{j+1} \leq \varepsilon$. Si cette inégalité n'est pas respectée, alors un nouveau groupe est formé. Dans chaque groupe $G_j$, un indice $f_j$ désigne le premier indice du groupe et un indice $l_j$ désigne dernier indice du groupe : $G_j = \{f_j,...,l_j\}$ pour j=1,...,K avec $f_1 = 1$ et $l_K = N$.
Le bloc 4 en déduit K valeurs propres totales $\hat{\lambda}_j$ telles que :

$$\hat{\lambda}_j = \frac{1}{l_j + 1 - f_j} \sum_{r=f_j}^{l_j} \lambda_r$$

avec j= 1, ...,K
Le bloc 4 calcule également K projections totales $Proj_j$, qui sont des matrices NxN, telles que :

$$Proj_j = \sum_{r=f_j}^{l_j} q_r q_r^T$$

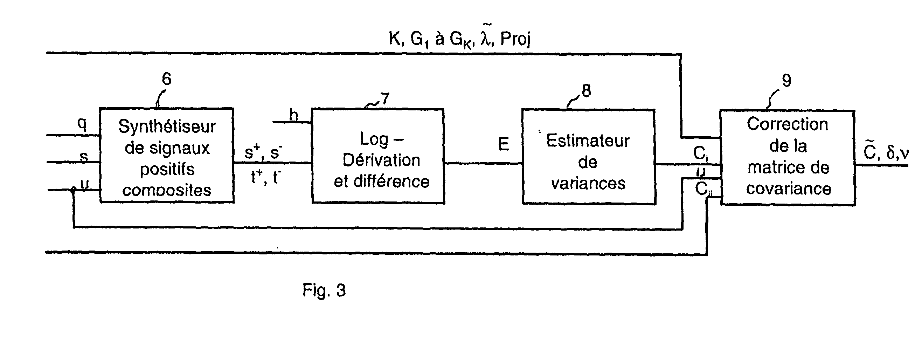

où $q_r^T$ est le transposé de $q_r$.
Le bloc 4 fournit en sortie, à un bloc de correction 5 ( figure 1), les N vecteurs propres $q_1$ à $q_N$, le nombre K, les K ensembles d'indices définissant les $\varepsilon$-groupes, les K valeurs propres totales $\hat{\lambda}_j$ et les K projections totales $Proj_j$. L'utilisation de la méthode de Kato garantit la stabilité de la correction vis-à-vis de perturbations des signaux sources.
Comme représenté à la figure 3, le bloc de correction 5 comporte un synthétiseur 6 de signaux positifs composites, un bloc 7 de log-dérivation et de détermination de différence, un estimateur de variances 8 et un bloc 9 de correction de la matrice de covariance.

Le synthétiseur 6 de signaux composites positifs reçoit en entrée les N signaux sources $s_1$ à $s_N$, de taille m, les N vecteurs propres $q_1$ à $q_N$, ainsi que P vecteurs réels $u_1$ à $u_p$, qui sont définis par l'utilisateur. Les N+P vecteurs q et u ($q_1$ à $q_N$ et $u_1$ à $u_p$) constituent des vecteurs coefficients de pondération des signaux sources. Le synthétiseur 6 décompose d'abord, selon une décomposition de Moreau, les vecteurs coefficients q et u en parties positives et négatives, telles que :

$$q_i = q_i^+ - q_i^- \quad \text{avec } q_i^+ \perp q_i^- \text{ et } i = 1,...,N$$
$$u_j = u_j^+ - u_j^- \quad \text{avec } u_j^+ \perp u_j^- \text{ et } j = 1,...,P$$

Les vecteurs = $q_j^+$, $q_i^-$, $u_j^+$ et $u_j^-$ sont des vecteurs positifs, à partir desquels le synthétiseur 6 forme quatre familles de signaux positifs composites $s^+$, $s^-$, $t^+$ et $t^-$ tels que :

$$s_i^+ = \sum_{l=1}^{N} \left[ q_i^+ \right]_l s_l$$

$$s_i^- = \sum_{l=1}^{N} \left[ q_i^- \right]_l s_l$$

avec i = 1,...,N

$$t_j^+ = \sum_{l=1}^{N} \left[ u_j^+ \right]_l s_l$$

$$t_j^- = \sum_{l=1}^{N} \left[ u_j^- \right]_l s_l$$

avec j = 1,...,P

Les 2(N+P) signaux positifs composites ainsi obtenus sont des vecteurs réels, de taille m. Ils sont appliqués à l'entrée du bloc 7 qui réalise une opération de log-dérivation standard puis effectue des opérations de différence entre certains signaux dérivés. L'opération de dérivation est du même type que celle effectuée par le bloc 2. Elle utilise le même pas de temps, entier, h ($1 \leq h \leq m$) et fournit les signaux dérivés $ds_i^+$, $ds_i^-$, $dt_i^+$ et $dt_i^-$, de longueur m-h, tels que :

$$\left[ ds_i^+ \right]^t = \frac{\left[ s_i^+ \right]^{t+h} - \left[ s_i^+ \right]^t}{\left[ s_i^+ \right]^t} \quad \text{et} \quad \left[ ds_i^- \right]^t = \frac{\left[ s_i^- \right]^{t+h} - \left[ s_i^- \right]^t}{\left[ s_i^- \right]^t}$$

$$\left[ dt_i^+ \right]^t = \frac{\left[ t_i^+ \right]^{t+h} - \left[ t_i^+ \right]^t}{\left[ t_i^+ \right]^t} \quad \text{et} \quad \left[ dt_i^- \right]^t = \frac{\left[ t_i^- \right]^{t+h} - \left[ t_i^- \right]^t}{\left[ t_i^- \right]^t}$$

De plus, comme dans le bloc 2, la fonction de dérivation est étendue à des signaux nuls, la dérivée d'un signal nul étant nulle.

Le bloc 7 forme ensuite N+P signaux E différences de dérivés, de taille p=m-h, tels que :

$E_i = ds_i^+ - ds_i^-$, pour i = 1,...,N et $E_i = dt_i^+ - dt_i^-$, pour i = N+1,...,N+P.

Chaque signal $E_i$ est un vecteur réel qui peut être représenté sous la forme :

$$E_i = \begin{bmatrix} E_i^1 \\ \vdots \\ E_i^t \\ \vdots \\ E_i^p \end{bmatrix}$$

pour i = 1,...,(N+P).

Les signaux E sont appliqués à l'entrée de l'estimateur de variances 8, du type empirique sans biais, qui calcule, de manière classique, les variances associées à ses signaux d'entrée. Il fournit ainsi (N+P) vecteurs $C_i$ représentatifs de ces variances, conformément à l'équation :

$$C_i = \frac{1}{p-1} \sum_{t=l}^{p} \left( E_i^t - \overline{E_i^t} \right)^2$$

avec $1 \le i \le N$

Les valeurs $\overline{E}_i$ sont les moyennes empiriques des signaux $E_i$, conformément à l'équation :

$$\overline{E_i} = \frac{1}{p} \sum_{i=1}^{t} E_i^t$$

Le bloc 9 reçoit en entrée la matrice de covariance C à corriger, constituée par une matrice réelle symétrique, de taille NxN, de grandeurs $C_{ij}$, les (N+P) vecteurs $C_i$ reconstitués fournis par l'estimateur de variances 8, l'entier K, les K ensembles d'indices $G_j=\{f_j,...,l_j\}$ pour j=1,...,K avec $f_1$=1 et $I_K$=N, les K valeurs propres totales $\lambda_j$ et les K projections totales $Proj_j$, qui lui sont fournies par le bloc 4, ainsi que les P vecteurs réels u.

Le bloc 9 calcule d'abord K valeurs propres totales corrigées $\lambda_j$ telles que :

$$\tilde{\lambda}_j = \frac{1}{I_j + 1 - f_j} \sum_{r=f_j}^{I_j} C_r$$

avec j = 1,...,K

Il recherche ensuite la matrice X la plus proche de la matrice C à corriger satisfaisant les K+P contraintes linéaires suivantes :

$\langle Proj_j, X \rangle = \tilde{\lambda}_i$ avec j = 1,...,K
$\langle u_i u_i^T, X \rangle = C_i$ avec i = 1,...,P

Le produit scalaire $\langle X,Y \rangle$ entre 2 matrices X et Y symétriques est défini par la trace, c'est-à-dire par la somme des éléments diagonaux du produit des 2 matrices.

La matrice X doit également être une matrice symétrique semi-définie symétrique $(X \ge 0)$.

Ainsi, les mesures spectrales totales reconstituées représentées par les vecteurs $C_i$ de variances, sont intégrées dans les contraintes linéaires.

La recherche est réalisée par le bloc 9 par une méthode de type quasi-Newton sur le dual d'un programme de moindres carrés semi-définis $(min \| X-C\|^2)$. Dans un mode particulier de réalisation, le bloc 9 utilise pour la recherche de la matrice X une méthode connue sous le nom de méthode de type BFGS. Une telle méthode est notamment décrite dans « Optimisation Numérique », Bonnans et al., volume 27 de « Mathématiques & Applications », Springer-Verlag, 1997.

Le bloc 9 fournit en sortie une matrice de covariance corrigée $\tilde{C}$ = X, de taille NxN, ainsi que K valeurs $\delta$, correspondant aux écarts fondamentaux de variances avant et après correction, et K+P paramètres duaux de sensibilité v, constitués par des nombres réels. et associés aux K+P contraintes linéaires. Les écarts fondamentaux $\delta$ de variance sont donnés par :

$\delta_i = \tilde{\lambda}_i - \hat{\lambda}_i$, avec i = 1,...,K.

Le fait de réaliser le calcul dans l'espace dual permet d'obtenir le résultat recherché plus rapidement et, en conséquence, de réduire le coût du dispositif de correction.

## Revendications

**1.** Dispositif basé sur ordinateur de traitement d'une pluralité (N) de signaux numériques sources (s), constitués par des échantillons de mesure des signaux physiques à analyser, comportant un dispositif de correction d'une matrice de covariance (C), représentative des relations entre les signaux sources (s), dispositif **caractérisé en ce que** le dispositif de correction comporte des moyens (4) de décomposition en éléments propres totaux, selon la méthode de décomposition spectrale de Kato, fournissant les valeurs propres totales ($\tilde{\lambda}$) de la matrice de covariance (C) à corriger et des premiers vecteurs coefficients (q), pour la combinaison des signaux sources (s), le dispositif comportant des moyens (5) de correction utilisant les valeurs propres totales ($\tilde{\lambda}$) et les premiers vecteurs coefficients (q) pour déterminer la matrice corrigée (C).

**2.** Dispositif selon la revendication 1, **caractérisé en ce que** le dispositif de correction comporte des moyens de détermination de seconds vecteurs coefficients (u) pour la combinaison des signaux sources (s).

**3.** Dispositif selon l'une des revendications 1 et 2, **caractérisé en ce que** les moyens de correction (5) comportent des moyens (6, 7, 8) d'estimation des variances ($C_i$) de combinaisons (E) des signaux sources utilisant les premiers et/ou les seconds vecteurs coefficients (q, u).

**4.** Dispositif selon la revendication 3, **caractérisé en ce que** le dispositif de correction comporte des moyens (9) de recherche de la matrice corrigée (X, $\tilde{C}$) la plus proche de la matrice (C) à corriger, en fonction des variances ($C_i$) fournies par les moyens (6, 7, 8) d'estimation et de projecteurs totaux (Proj) fournis par les moyens (4) de décomposition en éléments propres totaux.

**5.** Dispositif selon la revendication 4, **caractérisé en ce que** les moyens (9) de recherche comportant en outre des moyens pour l'application d'une méthode de type quasi-Newton sur le dual d'un programme de moindres carrés semi-définis.

**6.** Dispositif selon la revendication 5, **caractérisé en ce que** les moyens (9) de recherche comportant en outre des moyens pour l'application d'une méthode de type BFGS.

**7.** Dispositif selon l'une quelconque des revendications 3 à 6, **caractérisé en ce que** les moyens (6, 7, 8) d'estimation des variances ($C_i$) comportent des moyens (6) de décomposition des vecteurs coefficients (q, u) en parties positives et négatives.

## Patentansprüche

**1.** Computergestützte Vorrichtung zur Verarbeitung einer Mehrzahl (N) digitaler Quellsignale (s), die aus Messwerten zu analysierender physikalischer Signale bestehen, die eine Vorrichtung zur Korrektur einer Kovarianzmatrix (C) umfasst, welche die Beziehungen zwischen den Quellsignalen (s) wiedergibt, eine Vorrichtung, die **dadurch gekennzeichnet ist, dass** die Korrekturvorrichtung Mittel (4) zum Zerlegen in ganze Eigenelemente umfasst, nach der spektralen Kato-Zerlegungsmethode, welche die ganzen Eigenwerte ($\tilde{\lambda}$) der zu korrigierenden Kovarianzmatrix (C) sowie erste Koeffizienten-Vektoren (q) zur Kombination der Quellsignale (s) liefert, wobei die Vorrichtung Mittel (5) zur Korrektur umfasst, welche die ganzen Eigenwerte ($\tilde{\lambda}$) und die ersten Koeffizienten-Vektoren (q) zur Bestimmung der korrigierten Matrix ($\tilde{C}$) nutzen.

**2.** Vorrichtung nach Anspruch 1, **dadurch gekennzeichnet, dass** die Korrekturvorrichtung Mittel zur Bestimmung zweiter Koeffizienten-Vektoren (u) zur Kombination der Quellsignale (s) umfasst.

**3.** Vorrichtung nach einem der Ansprüche 1 und 2, **dadurch gekennzeichnet, dass** die Korrekturvorrichtungen (5) Mittel (6, 7, 8) zum Schätzen der Varianzen ($C_i$) von Kombinationen (E) der Quellsignale umfassen, welche die ersten und/oder die zweiten Koeffizienten-Vektoren (q, u) nutzen.

4.  Vorrichtung nach Anspruch 3, **dadurch gekennzeichnet, dass** die Korrekturvorrichtung Mittel (9) zum Suchen der korrigierten Matrix (X, $\tilde{C}$), die der zu korrigierenden Matrix (C) am nächsten ist, umfasst, je nach den von den Schätzmitteln (6, 7, 8) gelieferten Varianzen ($C_i$) und Gesamtprojektoren (Proj), die von den Mitteln (4) zum Zerlegen in ganze Eigenelemente geliefert werden.

5.  Vorrichtung nach Anspruch 4, **dadurch gekennzeichnet, dass** die Suchmittel (9) ferner Mittel zur Anwendung eines Verfahrens nach Art des quasi-Newton-Verfahrens auf das dual Programm eines halbdefinierten kleinsten Quadraten Programms umfassen.

6.  Vorrichtung nach Anspruch 5, **dadurch gekennzeichnet, dass** die Suchmittel (9) ferner Mittel zur Anwendung eines Verfahrens nach Art des BFGS-Verfahrens umfassen.

7.  Vorrichtung nach einem der Ansprüche 3 bis 6, **dadurch gekennzeichnet, dass** die Mittel (6, 7, 8) zum Schätzen der Varianzen ($C_i$) Mittel (6) zum Zerlegen der Koeffizienten-Vektoren (q, u) in positive und negative Teile umfassen.


**Claims**

1.  Computer based processing device for a plurality (N) of source digital signals (s), composed of measurement samples of the physical signals to be analysed, comprising a correction device for a covariance matrix (C), representative of the relations between the source signals (s), device **characterized in that** the correction device comprises means (4) for decomposing into total proper elements, according to the Kato spectral decomposition method, supplying the total proper values ($\tilde{\lambda}$) of the covariance matrix (C) to be corrected and of the first coefficient vectors (q) for the combination of the source signals (s), the device comprising means (5) of correction using the total proper values ($\tilde{\lambda}$) and the first coefficient vectors (q) in order to determine the corrected matrix ($\tilde{C}$).

2.  Device according to claim 1, **characterized in that** the correction device comprises means of determination of second coefficient vectors (u) for the combination of the source signals (s).

3.  Device according to one of claims 1 and 2, **characterized in that** the correction means (5) comprises means (6, 7, 8) for assessing combination (E) variances ($C_i$) of the source signals using the first and/or the second coefficient vectors (q, u).

4.  Device according to claim 3, **characterized in that** the correction device comprises searching means (9) for the corrected matrix (X, $\tilde{C}$) closest to the matrix (C) to be corrected, in relation to the variances ($C_i$) supplied by the assessment means (6, 7, 8) and to total projectors (Proj) supplied by the means (4) of decomposition into total proper elements.

5.  Device according to claim 4, **characterized in that** the searching means (9) further comprise means for applying a quasi-Newton type method on the dual of a semi-defined least square programme.

6.  Device according to claim 5, **characterized in that** the searching means (9) further comprise means for applying a BFGS type method.

7.  Device according to any one of claims 3 to 6, **characterized in that** the assessment means (6, 7, 8) of the variances ($C_i$) comprise means (6) for decomposing the coefficient vectors (q, u) into positive and negative portions.

Fig. 1

Fig. 2 (Art antérieur)

EP 1 406 180 B1

$K, G_1 \text{ à } G_K, \tilde{\lambda}, \text{Proj}$

q →

s →

u →

**6** Synthétiseur de signaux positifs composites

$s^+, s^-$
$t^+, t^-$

h →

**7** Log – Dérivation et différence

E →

**8** Estimateur de variances

$C_i$
$C_{ii}$

**9** Correction de la matrice de covariance

→ $\tilde{C}, \delta, \nu$

Fig. 3